# FASCICULE DE BREVET EUROPEEN

(11) **EP 4 185 530 B1**
(45) Date de publication et mention de la délivrance du brevet: **22.05.2024**
(21) Numéro de dépôt: 21740079.5
(22) Date de dépôt: 08.07.2021
(51) Int. Cl.: B64D 11/06

(54) **SUITE À AMÉNAGEMENT AMÉLIORÉ NOTAMMENT POUR UNE CABINE D'AVION**
SUITE MIT VERBESSERTER ANORDNUNG, INSBESONDERE FÜR EINE FLUGZEUGKABINE
SUITE WITH IMPROVED ARRANGEMENT, IN PARTICULAR FOR AN AIRCRAFT CABIN

(30) Priorité: 24.07.2020 FR 2007795
(43) Date de publication de la demande: 31.05.2023
(73) Titulaire: Safran Seats, 78370 Plaisir (FR); Safran Seats GB Limited, Cwmbran, Wales NP44 3HQ (GB)
(72) Inventeur: RUIZ, Oscar, 77550 MOISSY-CRAMAYEL (FR); GLAIN, Arthur, 77550 MOISSY-CRAMAYEL (FR); CAVERAU, Yann, 77550 MOISSY-CRAMAYEL (FR); WILLS, Paul, 77550 MOISSY-CRAMAYEL (FR); JAMES, Rachel, 77550 MOISSY-CRAMAYEL (FR); WOODINGTON, James, 77550 MOISSY-CRAMAYEL (FR); KILBANE, Shaun, 77550 MOISSY-CRAMAYEL (FR); JONES, Ryan, 77550 MOISSY-CRAMAYEL (FR)
(74) Mandataire: Marconnet, Sébastien
(86) Numéro de dépôt international: PCT/EP2021/069059
(87) Numéro de publication internationale: WO 2022/017822

(56) Documents cités:
- WO-A1-2008/122762
- US-A- 5 954 401
- US-A1- 2010 065 683
- US-A1- 2011 210 205
- US-A1- 2012 133 180
- US-A1- 2018 281 964

## Description

La présente invention porte sur une suite à aménagement amélioré, notamment pour une cabine d'avion. Au sens de l'invention, une suite est définie par un espace clos ou semi-clos dans lequel sont disposés au moins un siège et un arrangement de meubles situés à proximité du siège, tel qu'une table, un ottoman, ou tout autre élément nécessaire à l'aménagement de la suite.

L'invention trouve une application particulièrement avantageuse, mais non exclusive, pour les cabines de type "première classe" ainsi que potentiellement pour les cabines de type "classe affaires".

Les suites de type "classe affaires" et "première classe" comportent des sièges offrant aux passagers différentes positions de confort, d'une position "assise" jusqu'à une position "allongée", dans laquelle le siège définit un plan de couchage sensiblement horizontal pour que le passager puisse s'allonger.

Les tendances actuelles de conception requièrent des aménagements proches de ceux des chambres d'hôtel, tels que des minibars, des armoires, ainsi que l'augmentation de la largeur des suites de première classe afin de maximiser notamment l'espace de lit. En conséquence, de nouvelles dispositions du mobilier autour du siège ont été élaborées pour répondre à ces besoins.

On connaît ainsi une suite comportant un siège associé à deux accoudoirs et un large ottoman disposé devant le siège. Le siège est apte à passer dans une position allongée dans laquelle la surface de lit s'étend perpendiculairement à la direction de l'ensemble siège et table. Une table pliante est rangée à l'intérieur d'un l'accoudoir. Toutefois, le fait de disposer la table à côté du siège présente l'inconvénient de réduire la largeur disponible du siège. En outre, le fait que le lit se déploie perpendiculairement à l'ensemble formé par le siège et la table implique que la table n'est pas disponible pour être utilisée dans les positions intermédiaires du siège entre la position assise et la position allongée.

Un autre arrangement connu consiste à intégrer une table entre un ottoman et un siège principal. La table est rangée à l'intérieur du mobilier extérieur. Toutefois, le volume de rangement autour et derrière une cinématique de déplacement de la table n'est pas disponible pour augmenter la largeur du siège dans sa partie supérieure.

A Le document US2018/281964 décrit des exemples d'agencement de sièges pour un aéronef comportant un premier siège situé dans un premier espace d'accueil et un second siège situé dans un second espace d'accueil. Les premier et second espaces d'accueil sont configurés pour partager un espace au sol commun. Un écran séparateur situé entre les premier et deuxième espaces d'accueil est mobile entre une position rangée permettant la sortie des passagers entre les premier et deuxième espaces d'accueil à travers l'espace au sol commun, et une position déployée empêchant la sortie des passagers entre les premier et second espaces d'accueil à travers l'espace au sol commun.

L'invention vise à remédier aux inconvénients précités en proposant un aménagement de suite amélioré qui réponde notamment aux exigences d'espace et de confort des compagnies aériennes.

Plus précisément, l'invention est définie par le jeu de revendications ci-après.

L'invention permet ainsi, grâce à un tel arrangement de meubles à l'intérieur de la suite, d'améliorer le confort du passager en utilisant toute la largeur de la suite pour le siège. On dispose ainsi d'une largeur maximale de la zone de siège qui n'est pas impactée par la présence de l'armoire de rangement ou de la table. La configuration selon l'invention permet également à la suite de s'adapter aisément au profil de largeur réduite des parois latérales que l'on trouve généralement à l'avant de certains avions, et ce sans affecter la taille de la table ou de l'armoire de rangement. L'invention permet également de maximiser la densité de remplissage de la cabine tout en optimisant l'espace de vie pour le passager. L'invention procure donc un avantage concurrentiel par rapport aux suites actuelles de première classe.

Selon une réalisation de l'invention, la table est apte à passer à l'état déployé à partir du chariot lorsque ledit chariot se trouve en position déployée.

Selon une réalisation de l'invention, la table à l'état déployé est mobile suivant une direction parallèle à un axe du siège.

Selon une réalisation de l'invention, la table à l'état déployé est mobile entre une première position extrême dans laquelle la table est proche du siège et une deuxième position extrême dans laquelle la table est disposée à l'écart du siège.

Selon une réalisation de l'invention, dans la deuxième position extrême, la table mobile est superposée verticalement au moins en partie avec l'ottoman.

Selon une réalisation de l'invention, la table à l'état déployé est apte à prendre une position intermédiaire dans laquelle la table est disposée entre l'ottoman et le siège.

Selon une réalisation de l'invention, une largeur de la table est sensiblement égale à une largeur du siège.

Selon une réalisation de l'invention, la table comporte un seul battant.

Selon une réalisation de l'invention, la table comporte deux battants articulés l'un par rapport à l'autre.

Selon une réalisation de l'invention, le chariot est disposé à l'intérieur d'un boîtier de stockage lorsque le chariot est en position stockée.

Selon une réalisation de l'invention, le boîtier de stockage est fixe de façon à éviter la création d'un espace vide suite à un déplacement du chariot.

Selon une réalisation de l'invention, un espace de rangement est disposé sous l'ottoman.

Selon une réalisation de l'invention, l'ottoman est articulé pour permettre l'accès à l'espace de rangement.

Selon une réalisation de l'invention, l'armoire de rangement s'étend suivant toute une hauteur de la suite.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:

[Fig. 1] La figure 1 est une vue de dessus d'une suite selon la présente invention;

[Fig. 2] [Fig. 3] Les figures 2 et 3 sont des vues en perspective d'une suite selon la présente invention selon deux angles de vue différents;

[Fig. 4] La figure 4 est une vue en perspective d'une suite selon l'invention illustrant le chariot en position déployée;

[Fig. 5] La figure 5 une vue en perspective d'une suite selon l'invention illustrant la table à l'état déployé;

[Fig. 6] La figure 6 une vue en perspective d'une suite selon l'invention illustrant la table à l'état déployé et repoussée vers l'ottoman afin de permettre la sortie du passager vers le couloir de circulation;

[Fig. 7] La figure 7 est une représentation schématique d'un agencement de sièges dans une cabine d'avion comportant des suites selon l'invention en partie avant.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Dans la suite du document, les termes relatifs du type "avant" et "arrière" sont entendus par référence au sens que leur donnerait un passager installé dans le siège de la suite selon l'invention.

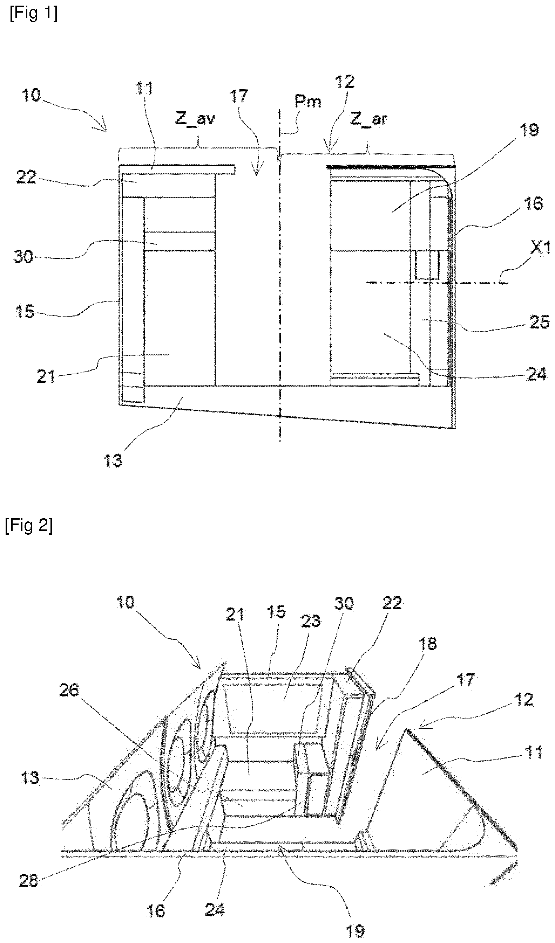

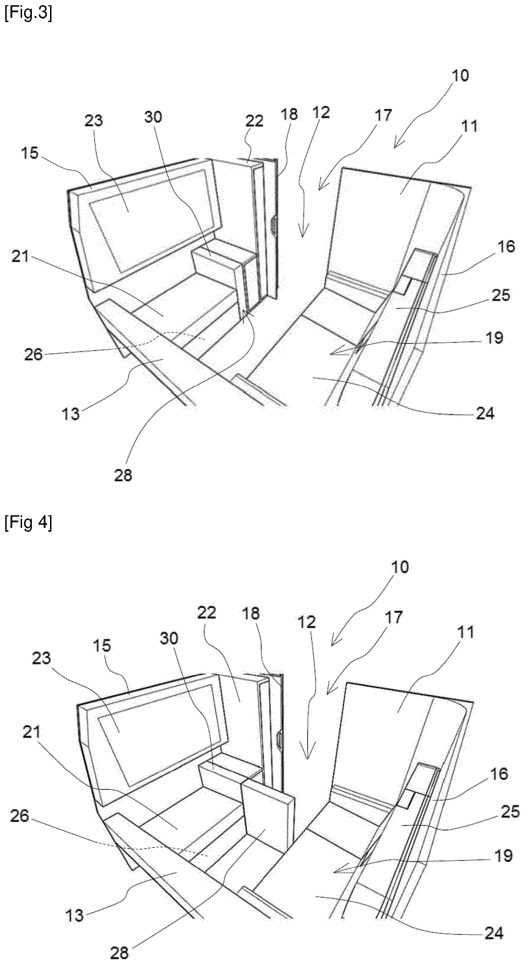

Les figures 1, 2 et 3 montrent une suite 10 pour une cabine d'avion délimitée par une première paroi latérale 11 disposée du côté d'un couloir de circulation 12, une deuxième paroi latérale 13 constituée par une portion d'une paroi du fuselage ou par une paroi de séparation entre deux suites 10 adjacentes, une paroi d'extrémité avant 15, et une paroi d'extrémité arrière 16. Un passage d'accès 17 est ménagé dans la paroi latérale 11 située côté couloir. Le cas échéant, on pourra prévoir une porte amovible 18 de fermeture de ce passage d'accès 17. Sur les figures 2 et 3, la porte 18 est représentée en position ouverte.

On définit une zone avant Z_Av de la suite 10 s'étendant entre un plan médian Pm de la suite 10, qui est perpendiculaire aux parois latérales 11, 13, et la paroi d'extrémité avant 15, tel que cela est montré sur la figure 1. Une zone arrière Z_ar de la suite 10 s'étend entre le plan médian Pm et la paroi d'extrémité arrière 16.

La suite 10 comporte un siège 19 disposé dans la zone arrière Z_ar à proximité de la paroi d'extrémité arrière 16. Un ottoman 21 et une armoire de rangement 22 sont disposés dans la zone avant Z_av à proximité de la paroi d'extrémité avant 15. En éloignant les éléments de mobilier 21, 22 de la zone d'implantation du siège 19, il est ainsi possible d'installer un siège 19 occupant toute la largeur de la suite 10. On améliore ainsi l'espace de vie pour le passager.

La suite 10 pourra être équipée d'un système IFE (pour In-Flight Entertainment) comportant notamment un écran vidéo 23 porté par la paroi d'extrémité avant 15.

Plus précisément, le siège 19 comporte une assise 24 et un dossier 25 qui pourra, le cas échéant, être réalisé en deux parties articulées entre elles. Le siège 19 présente un axe X1 qui est un axe horizontal passant par un plan médian de l'assise 24 et du dossier 25 du siège 19. Le siège 19 présente une largeur qui est plus grande qu'une largeur d'un siège conventionnel, de sorte que cela permet à un passager de s'asseoir suivant différentes orientations. Par exemple, le passager peut être assis de façon à avoir son corps orienté suivant une direction qui est sensiblement parallèle à l'axe X1 du siège 19, ou de façon à avoir son corps orienté suivant un angle non nul pouvant atteindre jusqu'à 90 degrés par rapport à l'axe X1 du siège 19.

Un siège 19 pourra être convertible, via une cinématique adaptée, entre une position "assise", correspondant à la position utilisée notamment lors des phases d'arrêt, de décollage, et d'atterrissage de l'avion, et une position "allongée", dans laquelle l'assise 24 se déplace vers l'avant et le dossier 25 bascule sensiblement à l'horizontal de sorte que l'assise 24, le dossier 25, et l'ottoman 21 forment une surface de lit pour le passager.

L'ottoman 21 est de type ouvert par opposition aux ottomans disposés à l'intérieur d'un logement de pieds. Outre sa fonction première de réception des pieds d'un passager, l'ottoman 21 pourra être utilisé par un deuxième passager comme siège 19. De préférence, un espace de rangement 26 visible notamment sur la figure 2 est disposé sous l'ottoman 21. L'ottoman 21 pourra être articulé, notamment suivant un axe de rotation, pour permettre l'accès à l'espace de rangement 26.

De préférence, l'ottoman 21 est disposé du côté le plus proche de la portion de la paroi du fuselage 13 tandis que l'armoire 22 est disposée du côté le plus proche du couloir de circulation 12. En effet, la forme incurvée de la paroi du fuselage a un impact minimal sur l'ottoman 21 qui présente un encombrement réduit. En outre, on évite toute interférence entre l'armoire 22 et la paroi du fuselage de forme incurvée. L'armoire 22 peut ainsi s'étendre suivant toute une hauteur de la suite 10. L'armoire 22 présente un espace de rangement important autorisant le rangement de longs vêtements. L'armoire 22 est accessible depuis l'intérieur de la suite 10.

Par ailleurs, en plaçant les éléments, tels que l'armoire 22, qui pourraient entraver la circulation de l'air à distance de la paroi de fuselage et en plaçant l'ottoman 21 qui autorise une meilleure circulation de l'air à proximité de la paroi du fuselage de la cabine, il est possible de répondre aux contraintes de décompression de certains avions, tels que l'airbus A350 (marque déposée) ou similaires.

En outre, une table mobile 27 est apte à prendre un état rangé et un état déployé. A l'état rangé, la table 27 s'étend dans un plan vertical. La table 27 est alors disposée entre l'armoire 22 et l'ottoman 21. A l'état déployé, la table 27 s'étend dans un plan horizontal. D'autres éléments, tels qu'un minibar, ou un meuble de rangement, pourront être disposés entre l'armoire 22 et l'ottoman 21.

La table 27 pouvant ainsi être disposée à côté de l'ottoman 21 dans une zone de rangement, la table 27 n'a pas d'impact sur la largeur du siège 19. Il est en outre possible d'utiliser une table 27 de grande largeur dont les dimensions n'ont pas d'impact significatif sur les éléments environnants ni sur la circulation d'air. En revanche, si la table 27 était disposée à proximité de la paroi du fuselage à l'état stocké, la hauteur de la table 27 pourrait devenir une contrainte, dans la mesure où elle pourrait obstruer un hublot et/ou la circulation de l'air.

La table 27 est montée sur un chariot 28 mobile en translation entre une position stockée dans laquelle le chariot 28 est disposé avec la table 27 entre l'ottoman 21 et l'armoire 22 (emplacement d'origine) et une position déployée dans laquelle le chariot 28 est rapproché du siège 19, tel que montré sur la figure 4. Pour passer de la position stockée à la position déployée, le chariot 28 pourra ainsi être déplacé en translation vers l'arrière en direction du siège 19. La table 27 est apte à passer à l'état déployé à partir du chariot 28 lorsque ledit chariot 28 se trouve en position déployée.

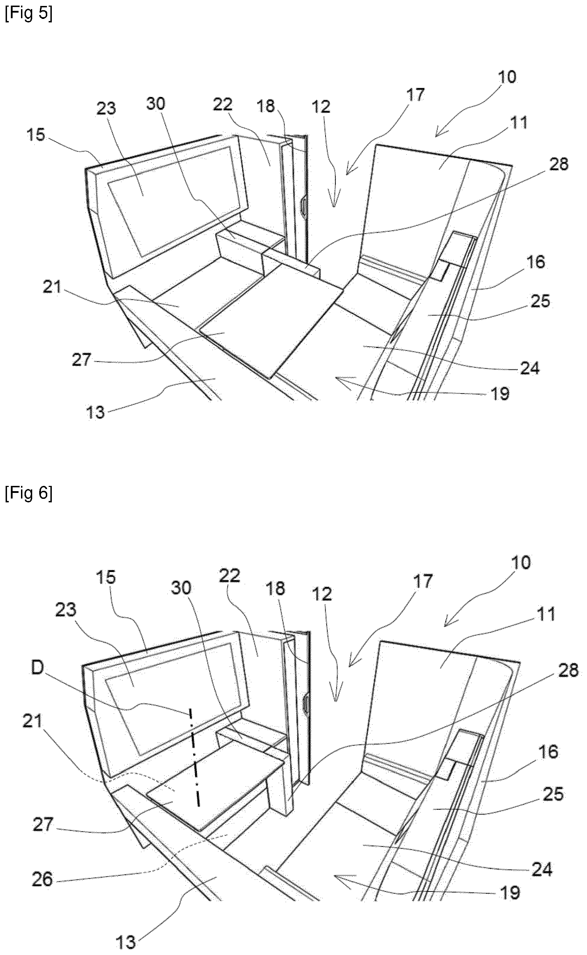

De préférence, la table 27 à l'état déployé est mobile suivant une direction parallèle à l'axe X1 du siège 19. En l'occurrence, la table 27 à l'état déployé est mobile entre une première position extrême dans laquelle la table 27 est proche du siège 19, tel que cela est montré sur la figure 5, et une deuxième position extrême dans laquelle la table 27 est disposée dans la zone avant Z_av de la cabine de façon à être à l'écart du siège 19 et du passager, tel que cela est montré sur la figure 6. Dans la deuxième position extrême, la table 27 pourra être superposée verticalement au moins en partie avec l'ottoman 21. Par "superposée verticalement au moins en partie", on entend le fait qu'il existe au moins une droite verticale D coupant à la fois la table 27 et l'ottoman 21.

La table 27 à l'état déployé pourra ainsi être poussée vers l'avant de la cabine par le passager afin de dégager l'espace central de la suite 10. Le passager pourra alors sortir de la suite 10 sans avoir à retirer les objets posés sur la table 27.

La table 27 à l'état déployé pourra également prendre une position intermédiaire dans laquelle la table 27 est disposée entre l'ottoman 21 et le siège 19. Le passager de la suite 10 pourra ainsi prendre un repas, ou échanger des documents, en face à face avec une deuxième personne assise sur l'ottoman 21.

Avantageusement, la largeur de la table 27 est sensiblement égale à une largeur du siège 19. Par "sensiblement égale", on entend le fait qu'il peut y avoir une variation de largeur de l'ordre de 20% entre ces deux éléments. Dans l'exemple représenté, la table 27 comporte un seul battant. En variante, la table 27 comporte deux battants articulés l'un par rapport à l'autre.

Comme on peut le voir sur les figures 2, 3, et 4, le chariot 28 est disposé à l'intérieur d'un boîtier de stockage 30 lorsque le chariot 28 est en position stockée. Le boîtier de stockage 30 présente une forme parallélépipédique. Le boîtier de stockage 30 ouvert en direction du siège 19 est disposé entre l'armoire 22 et l'ottoman 21. Le boîtier de stockage 30 reste fixe lorsque le passager fait glisser le chariot 28 vers l'arrière et lorsque la table 27 est déployée.

Par rapport à la position stockée, le chariot 28 s'éloigne d'une distance comprise entre 15 pouces (38.1 cm) et 25 pouces (63.5cm), notamment une distance de l'ordre de 20 pouces (50.8cm), pour atteindre la position déployée dans laquelle la table 27 est suffisamment proche du passager pour être utilisée.

Le boîtier 30 fixe permet d'éviter la création d'un espace vide suite à un déplacement du chariot 28 dans lequel des objets pourraient se coincer et empêcher alors le chariot 28 et la table 27 de revenir en position stockée. Le boîtier 30 offre également une surface supérieure adaptée au support de petits objets.

On décrit ci-après le fonctionnement du dispositif selon l'invention. Le chariot 28 et la table 27 à l'état rangé sont par défaut logés dans le boîtier de stockage 30, tel que montré sur la figure 3. Le passager s'installe sur le siège 19 et tire l'ensemble chariot 28-table 27 vers l'arrière en direction du siège 19, de façon à faire passer le chariot 28 de la position stockée à la position déployée, tel que montré sur la figure 4. Le passager peut alors faire passer la table 27 à l'état déployé de façon à ce que la table 27 s'étende dans un plan horizontal, tel que représenté en figure 5. Il peut ensuite 10 tirer la table 27 vers lui afin de l'utiliser au cours d'un repas ou d'une séance de travail.

Dans le cas où le passager souhaite sortir de la suite 10, le passager peut pousser la table 27 à l'état déployé vers l'ottoman 21 (cf. figure 6) afin de libérer l'espace central de la suite 10 et accéder sans difficulté au passage vers le couloir de circulation 12.

Dans le cas où le passager reçoit un visiteur, ce dernier pourra s'asseoir sur l'ottoman 21, tandis que la table 27 pourra être disposée en position intermédiaire. Le passager et le visiteur pourront ainsi partager un repas ou des documents en tête à tête sur la table 27 disposée entre eux.

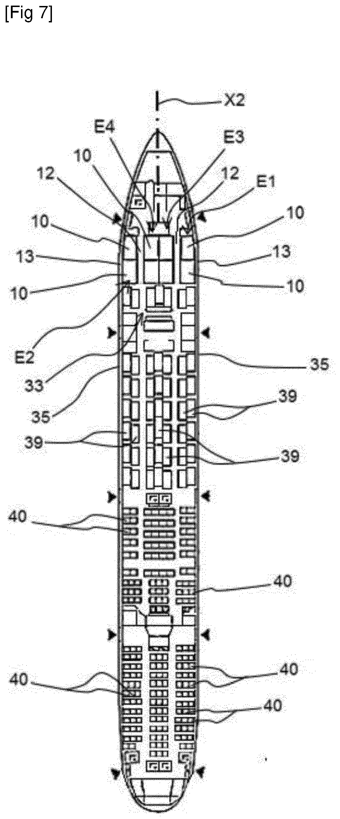

Comme cela est représenté sur la figure 7, l'invention est de préférence mise en oeuvre avec une cabine d'avion 33 à deux couloirs de circulation 12.

Les suites 10 pourront être installées en partie avant de la cabine d'avion 33 dont la largeur diminue à mesure qu'on se rapproche du nez de l'avion.

Suivant un exemple de réalisation, un premier ensemble E1 et un deuxième ensemble E2 de deux suites 10 sont installés de façon symétrique par rapport à un axe longitudinal X2 de l'avion. Le premier ensemble E1 de deux suites 10 est disposé à tribord le long d'une portion 13 de la paroi du fuselage 35. Le deuxième ensemble de deux suites 10 est disposé à bâbord le long d'une portion 13 de la paroi du fuselage 35.

En outre, un troisième ensemble E3 de deux suites 10 et un quatrième ensemble E4 de deux suites 10 sont installés en partie centrale de la cabine d'avion 33. Le troisième ensemble E3 et le quatrième ensemble E4 sont séparés entre eux par une paroi de séparation 13.

Les ensembles de suites E1 et E3 sont séparés entre eux par un premier couloir de circulation 12. Les ensembles de suites E2 et E4 sont séparés entre eux par un deuxième couloir de circulation 12.

Bien entendu, le nombre de suites 10 installées pourra être adapté en fonction de l'espace disponible dans la cabine d'avion 33.

Des unités de sièges 39 de type "classe affaires" pourront être installées en partie intermédiaire de la cabine d'avion 33. Des sièges 40 de type classe économique pourront être installés en partie arrière de la cabine d'avion 33.

En variante, les suites 10 selon l'invention pourront être installées dans une cabine d'avion de type monocouloir.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention .

## Revendications

1. Suite (10) notamment pour une cabine d'avion comportant:
- un siège (19),
- un ottoman (21), et
- une armoire de rangement (22),
- ladite suite (10) comportant en outre une table mobile (27) apte à prendre:
- un état rangé dans lequel ladite table mobile (27) s'étend dans un plan vertical, ladite table mobile (27) étant alors disposée entre l'armoire (22) et l'ottoman (21), et
- un état déployé dans lequel ladite table mobile (27) s'étend dans un plan horizontal,
**caractérisé en ce que** :
- la table (27) est montée sur un chariot (28) mobile en translation entre une position stockée dans laquelle le chariot (28) est disposé avec la table (27) entre l'ottoman (21) et l'armoire de rangement (22) et une position déployée dans laquelle le chariot (28) est rapproché du siège (19),
- le chariot (28) étant disposé à l'intérieur d'un boîtier de stockage (30) lorsque le chariot (28) est en position stockée,
- le boîtier de stockage (30) étant disposé entre l'armoire (22) et l'ottoman (21), ce boîtier de stockage (30) étant ouvert en direction du siège (19), de sorte que l'ensemble chariot (28)-table (27) peut être tiré vers l'arrière en direction du siège (19), de façon à faire passer le chariot (28) de la position stockée à la position déployée.

2. Suite selon la revendication 1, **caractérisée en ce que** la table (27) est apte à passer à l'état déployé à partir du chariot (28) lorsque ledit chariot (28) se trouve en position déployée.

3. Suite selon la revendication 1 ou 2, **caractérisée en ce que** la table (27) à l'état déployé est mobile suivant une direction parallèle à un axe (X1) du siège (19).

4. Suite selon l'une quelconque des revendications 1 à 3, **caractérisée en ce que** la table (27) à l'état déployé est mobile entre une première position extrême dans laquelle la table (27) est proche du siège (19) et une deuxième position extrême dans laquelle la table (27) est disposée à l'écart du siège (19).

5. Suite selon la revendication 4, **caractérisée en ce que** dans la deuxième position extrême, la table mobile (27) est superposée verticalement au moins en partie avec l'ottoman (21).

6. Suite selon l'une quelconque des revendications 1 à 5, **caractérisée en ce que** la table (27) à l'état déployé est apte à prendre une position intermédiaire dans laquelle la table (27) est disposée entre l'ottoman (21) et le siège (19).

7. Suite selon l'une quelconque des revendications 1 à 6, **caractérisée en ce qu'**une largeur de la table (27) est sensiblement égale à une largeur du siège (19).

8. Suite selon l'une quelconque des revendications 1 à 7, **caractérisée en ce que** la table (27) comporte un seul battant.

9. Suite selon l'une quelconque des revendications 1 à 7, **caractérisée en ce que** la table (27) comporte deux battants articulés l'un par rapport à l'autre.

10. Suite selon l'une quelconque des revendications 1 à 9, **caractérisée en ce que** le boîtier de stockage (30) est fixe de façon à éviter la création d'un espace vide suite à un déplacement du chariot (28).

11. Suite selon l'une quelconque des revendications 1 à 10, **caractérisée en ce qu'**un espace de rangement (26) est disposé sous l'ottoman (21).

12. Suite selon la revendication 11, **caractérisée en ce que** l'ottoman (21) est articulé pour permettre l'accès à l'espace de rangement (26).

13. Suite selon l'une quelconque des revendications 1 à 12, **caractérisée en ce que** l'armoire de rangement (22) s'étend suivant toute une hauteur de ladite suite (10).

## Patentansprüche

1. Baugruppe (10), insbesondere für eine Flugzeugkabine, mit:
- einem Sitz (19),
- einer Ottomane (21) und
- einem Lagerschrank (22),
- wobei die Baugruppe (10) außerdem einen beweglichen Tisch (27) umfasst, der Folgendes einnehmen kann:
- einen eingefahrenen Zustand, in dem sich der bewegliche Tisch (27) in einer vertikalen Ebene erstreckt, wobei der bewegliche Tisch (27) dann zwischen dem Schrank (22) und der Ottomane (21) angeordnet ist, und
- einen ausgefahrenen Zustand, in dem sich der bewegliche Tisch (27) in einer horizontalen Ebene erstreckt,
**dadurch gekennzeichnet, dass**:
- der Tisch (27) auf einem Schlitten (28) montiert ist, der translatorisch zwischen einer eingefahrenen Stellung, in der der Schlitten (28) mit dem Tisch (27) zwischen der Ottomane (21) und dem Lagerschrank (22) angeordnet ist und einer ausgefahrenen Stellung, in der der Schlitten (28) näher an den Sitz (19) gebracht wird, bewegbar ist,
- wobei der Schlitten (28) in der eingefahrenen Stellung des Schlittens (28) innerhalb eines Lagergehäuses (30) angeordnet ist,
- wobei das Lagergehäuse (30) zwischen dem Schrank (22) und der Ottomane (21) angeordnet ist, wobei dieses Lagergehäuse (30) zum Sitz (19) hin offen ist, so dass die Anordnung aus Schlitten (28) und Tisch (27) nach hinten zum Sitz (19) gezogen werden kann, um den Schlitten (28) von der eingefahrenen Stellung in die ausgefahrene Stellung zu bewegen.

2. Baugruppe nach Anspruch 1, **dadurch gekennzeichnet, dass** der Tisch (27) vom Schlitten (28) in den ausgefahrenen Zustand bewegbar ist, wenn sich der Schlitten (28) in der ausgefahrenen Stellung befindet.

3. Baugruppe nach Anspruch 1 oder 2, **dadurch gekennzeichnet, dass** der Tisch (27) im ausgefahrenen Zustand in einer Richtung parallel zu einer Achse (X1) des Sitzes (19) beweglich ist.

4. Baugruppe nach einem der Ansprüche 1 bis 3, **dadurch gekennzeichnet, dass** der Tisch (27) im ausgefahrenen Zustand zwischen einer ersten Extremstellung, in der sich der Tisch (27) nahe am Sitz (19) befindet, und einer zweiten Extremstellung, in der der Tisch (27) vom Sitz (19) entfernt ist, bewegbar ist.

5. Baugruppe nach Anspruch 4, **dadurch gekennzeichnet, dass** in der zweiten Extremstellung der bewegliche Tisch (27) zumindest teilweise vertikal über der Ottomane (21) liegt.

6. Baugruppe nach einem der Ansprüche 1 bis 5, **dadurch gekennzeichnet, dass** der Tisch (27) im ausgefahrenen Zustand eine Zwischenstellung einnehmen kann, in der der Tisch (27) zwischen der Ottomane (21) und dem Sitz (19) angeordnet ist.

7. Baugruppe nach einem der Ansprüche 1 bis 6, **dadurch gekennzeichnet, dass** eine Breite des Tisches (27) im Wesentlichen gleich einer Breite des Sitzes (19) ist.

8. Baugruppe nach einem der Ansprüche 1 bis 7, **dadurch gekennzeichnet, dass** der Tisch (27) eine einzige Klappe aufweist.

9. Baugruppe nach einem der Ansprüche 1 bis 7, **dadurch gekennzeichnet, dass** der Tisch (27) zwei gelenkig zueinander angeordnete Klappen aufweist.

10. Baugruppe nach einem der Ansprüche 1 bis 9, **dadurch gekennzeichnet, dass** das Lagergehäuse (30) so fixiert ist, dass sich durch eine Bewegung des Schlittens (28) kein Leerraum bildet.

11. Baugruppe nach einem der Ansprüche 1 bis 10, **dadurch gekennzeichnet, dass** unter der Ottomane (21) ein Lagerraum (26) angeordnet ist.

12. Baugruppe nach Anspruch 11, **dadurch gekennzeichnet, dass** die Ottomane (21) gelenkig ist, um den Zugang zum Lagerraum (26) zu ermöglichen.

13. Baugruppe nach einem der Ansprüche 1 bis 12, **dadurch gekennzeichnet, dass** sich der Lagerschrank (22) über die gesamte Höhe der Baugruppe (10) erstreckt.

## Claims

1. A suite (10) in particular for an airplane cabin comprising:
- a seat (19),
- an ottoman (21), and
- a storage cabinet (22),
- said suite (10) further comprising a movable table (27) capable of taking:
- a stored state in which said movable table (27) extends in a vertical plane, said movable table (27) then being arranged between the cabinet (22) and the ottoman (21), and
- a deployed state in which said movable table (27) extends in a horizontal plane,
**characterized in that**:
- the table (27) is mounted on a carriage (28) movable in translation between a stored position in which the carriage (28) is arranged with the table (27) between the ottoman (21) and the storage cabinet (22) and a deployed position in which the carriage (28) is brought closer to the seat (19),
- the carriage (28) being arranged inside a storage box (30) when the carriage (28) is in the stored position,
- the storage box (30) being arranged between the cabinet (22) and the ottoman (21), this storage box (30) being open towards the seat (19), so that the trolley (28)-table (27) assembly can be pulled rearward towards the seat (19), so as to move the carriage (28) from the stored position to the deployed position.

2. The suite according to claim 1, **characterized in that** the table (27) is movable into the deployed state from the carriage (28) when said carriage (28) is in the deployed position.

3. The suite according to claim 1 or 2, **characterized in that** the table (27) in the deployed state is movable in a direction parallel to an axis (X1) of the seat (19).

4. The suite according to any of the claims 1 to 3, **characterized in that** the table (27) in the deployed state is movable between a first extreme position in which the table (27) is close to the seat (19) and a second extreme position in which the table (27) is away from the seat (19).

5. The suite according to claim 4, **characterized in that** in the second extreme position, the movable table (27) is superposed vertically at least in part with the ottoman (21).

6. The suite according to any of the claims 1 to 5, **characterized in that** the table (27) in the deployed state is capable of taking an intermediate position in which the table (27) is arranged between the ottoman (21) and the seat (19).

7. The suite according to any of the claims 1 to 6, **characterized in that** a width of the table (27) is substantially equal to a width of the seat (19).

8. The suite according to any of the claims 1 to 7, **characterized in that** the table (27) has a single flap.

9. The suite according to any of the claims 1 to 7, **characterized in that** the table (27) comprises two flaps articulated relative to each other.

10. The suite according to any of the claims 1 to 9, **characterized in that** the storage box (30) is fixed so as to prevent an empty space from being formed because of a movement of the carriage (28).

11. The suite according to any of the claims 1 to 10, **characterized in that** a storage space (26) is arranged under the ottoman (21).

12. The suite according to claim 11, **characterized in that** the ottoman (21) is articulated to allow access to the storage space (26).

13. The suite according to any of the claims 1 to 12, **characterized in that** the storage cabinet (22) extends along an entire height of said suite (10).
